# EUROPEAN PATENT SPECIFICATION

(11) **EP 0 472 414 B1**
(45) Date of publication and mention of the grant of the patent: **21.01.1998**
(21) Application number: 91307681.6
(22) Date of filing: 21.08.1991
(51) Int. Cl.: G11B 7/007, G11B 20/10, G11B 7/00, G11B 11/00, G11B 11/10

(54) **Disc-shaped recording media**
Scheibenförmiges Aufzeichnungsmedium
Milieu d'enregistrement en forme de disque

(30) Priority: 24.08.1990 JP 222823/90
(43) Date of publication of application: 26.02.1992
(73) Proprietor: SONY CORPORATION, Tokyo 141 (JP)
(72) Inventor: Tsurushima, Katsuaki, Shinagawa-ku, Tokyo 141 (JP); Yoshida, Tadao, Shinagawa-ku, Tokyo 141 (JP)
(74) Representative: Cotter, Ivan John

(56) References cited:
- EP-A- 326 437
- PATENT ABSTRACTS OF JAPAN vol. 12, no. 268 (E-638) 27 July 1988, & JP-A-63 050282 (MATSUSHITA ELECTRIC IND CO LTD) 03 March 1988,
- PATENT ABSTRACTS OF JAPAN vol. 13, no. 256 (P-884) 14 June 1989, & JP-A-01 052267 (HITACHI LTD) 28 February 1989,
- PATENT ABSTRACTS OF JAPAN vol. 12, no. 363 (P-764) 29 September 1988, & JP-A-63 115036 (YOKOGAWA ELECTRIC CORP) 19 May 1988,
- Philips Technical Review vol. 44, no. 11, November 1989, Eindhoven, Netherlands
- pages 326 - 333; B.A.G. van Luyt et al: "The Compact Disc Interactive System"
- Journal of the Audio Engineering Society vol. 36, no. 4, April 1988, New York, NY, USA pages 250 - 282; Ken C. Pohlmann: "The Compact Disc Formats: Technology and Applications"

## Description

This invention relates to disc-shaped recording media. More particularly, but not exclusively, the invention relates to disc-shaped recording media on which compressed audio PCM data are recorded and which advantageously may be employed in disc recording/reproducing apparatus.

An optical disc may have a recording capacity two or three times larger than that of a magnetic disc, while enabling access at a higher speed than that for a tape recording medium. The optical disc also has the advantages that it enables contactless data recording/reproduction on or from the medium, and is superior in durability, and hence has become more popular in recent years. The so-called compact disc (CD) is one of the widely known types of optical disc.

For providing a portable and, above all, a pocketable headphone stereo or similar optical disc recording/reproducing apparatus, a compact disc with a disc diameter of 12 cm and a compact disc with a disc diameter of 8 cm (so-called CD single) have been proposed. However, with a disc diameter of 12 cm, the recording/reproducing apparatus is too bulky to be readily portable. Therefore, a disc having a diameter of 8 cm or less may be thought to be convenient. However, in attempting to construct a portable or pocket size recording and/or reproducing apparatus using an optical disc having a diameter of 8 cm or less, the following problem arises.

In the case of a standard CD format, in which an optical disc on which are recorded stereophonic digital pulse code modulated (PCM) audio signals sampled with a sampling frequency of 44.1 kHz and quantised by 16 bits is supplied by a producer, and in which these signals are exclusively reproduced by the user (CD-DA format), the playback time (recording time) of a disc which is 8 cm in diameter is 20 to 22 minutes at most. Thus, a symphony of classical music cannot completely be recorded on one disc side. A playback time of 74 minutes or longer, which is approximately equal to that of a compact disc which is 12 cm in diameter, is desired. Moreover, with this CD-DA format, recording by the user is not feasible. In addition, a contactless type optical pickup device is vulnerable to mechanical vibrations and subject to detracking or defocusing. Thus, when the apparatus is to be portable, strong measures need to be taken to prevent adverse effects of detracking or defocusing on the reproducing operation.

With the so-called CD-interactive (CD-I) format, levels A to C as shown in the Table 1 below are prescribed as modes for recording/reproducing bit-compressed digital audio signals.

**Table 1**

| levels | sampling frequency | number of bits for quantisation | bandwidth | playback time (stereo/monaural) |
|---|---|---|---|---|
| A | 37.8 kHz | 8 | 17 kHz | 2/4 |
| B | 37.8 kHz | 4 | 17 kHz | 4/8 |
| C | 18.9 kHz | 4 | 8.5 kHz | 8/16 |

When reproducing a disc recorded in, for example, the level B mode, signals obtained by fourfold bit compression of standard CD-DA format digital signals are reproduced. Thus, if all of the recorded data are stereophonic audio compressed data, the playback time becomes fourfold, or reproduction of eight-channel data becomes possible, so that reproduction for 70 minutes or longer becomes possible with an optical disc having a diameter in the region of 6 cm.

With the CD-I format, the disc is rotationally driven at the same linear velocity as that for the standard CD-DA format, so that the continuous audio compressed data are reproduced at a rate of one unit per n reproducing units on the disc, where n is a figure corresponding to the playback time or the bit compression rate of data and is equal to 4 (n=4) with the level B stereo mode. This unit is termed a block or sector, and is made up of 98 frames and has a period of 1/75 second. Therefore, with this level B stereo mode, a data string in which one of four sectors is an audio sector, such as S D D D S D D D ...., where S is an audio sector and D is another data sector or sectors, is recorded on a sector-by-sector basis on the disc. However, for actual recording, since the above data string undergoes a predetermined encoding similar to that for ordinary CD format audio data, such as error correction coding and interleaving, data of the audio sector S and data of the data sector D are arranged in a scrambled fashion in the recording sectors on the disc. (The other data sectors D may, for example, be video or computer data.) When the bit-compressed audio signals are also used for the data sector D, a data string in which four-channel audio sectors S1 to S4 are cyclically arranged, that is a data string S1 S2 S3 S4 S1 S2 S3 S4 ...., is encoded and recorded on the disc. When recording and reproducing continuous audio signals, channel 1 data corresponding to the audio sectors S1 are reproduced from the innermost to the outermost sides of the disc. Channel 2 data corresponding to the audio sectors S2 are then reproduced from the innermost to the outermost sides of the disc. Subsequently, channel 3 data corresponding to the next audio sectors S3 are reproduced from the innermost to the outermost sides of the disc. Finally, channel 4 data corresponding to the audio sectors S4 are reproduced from the innermost to the outermost sides of the disc to enable data reproduction for a continuous fourfold time duration.

To effect the above-mentioned continuous reproduction, several track jump operations over a distance spanning the inner and outer disc peripheries are required. Since a track jump cannot be achieved instantaneously, playback data become depleted for a short time period. That is, the playback sound is momentarily interrupted. On the other hand, when continuous audio signals are to be recorded, it is not possible to record only the sector S2 signals, as an example, because the data need to undergo interleaving at the time of recording. That is, sector S2 data need to be interleaved with adjoining and even nearby sectors, such as the sectors S1 and S3, whereby it becomes necessary to rewrite signals of previously recorded sectors. Thus, it is extremely difficult to record the continuous compressed audio data, while real-time processing is virtually impossible.

If the above drawbacks could be eliminated, a recording/reproducing time almost as long as or even longer than that of a standard 12 cm CD could be realised with an 8 cm disc or a disc of a lesser outer diameter. In such case, the sizes of various disc parts need to be selected to have optimum values by taking account of the demand for size reduction of the disc recording/reproducing apparatus and the recording capacity of the disc. Such selection of the sizes of the various disc parts is critical, because it affects not only the size of the disc recording/reproducing apparatus, but also the feel of use of the apparatus and the possibility of the apparatus coming into widespread use.

Journal of the Audio Engineering Society, vol. 36, no. 4, April 1988, New York, NY, USA, pages 250-282, Ken C Pohlmann, "The Compact Disc Formats: Technology and Applications" discloses a disc-shaped recording medium (specifically a 12cm CD) in which audio data are recorded at a track pitch of 1.6 micrometres and a linear velocity of 1.2 to 1.4 m/s.

European Patent Application Publication No. EP-A-0 326 437 discloses a disc-shaped magneto-optical recording medium of CD size (12 cm in diameter). The medium comprises a recording region which is divided into a music part adjacent the inner periphery and a data part adjacent the outer periphery. The music part has music data recorded thereon by the PCM method in a data-compressed form. The CD method may be employed and the music data may be compressed to some 1/4. The inner diameter of the music part is 50 mm. The outer diameter of the music part is 70 minutes. A constant linear velocity system may be used to control the speed of rotation of the medium.

According to respective different aspects of the invention there are provided disc-shaped recording media as set forth in the respective independent claims hereof.

Preferred embodiments of the invention described below provide a disc-shaped recording medium on which compressed audio data or the like are recorded such that a moderate recording/reproducing time may be ensured and the size may be such as to meet the demand for size reduction of recording/reproducing apparatus.

By setting the inner and outer diameters of the data recording region in the above manner, a recording/reproducing time of about 60 minutes at minimum and about 72 to 76 minutes on average may be achieved by recording compressed audio data with a compression rate of 1/4 at a track pitch of 1.6 micrometres and a linear velocity of 1.2 to 1.4 m/s.

Considering the above conditions more specifically, if the medium comprises an optical disc of the same shape as the compact disc, and if the inner diameter of the data recording region is less than 32 mm, then, as described more fully below, an optical head travelling radially inwardly thrusts on a disc driving spindle because a lead-in region has an inner diameter less than the inner diameter of the data recording region. The optical head is restricted in the manner of its movement and becomes unable to trace the lead-in region. In the case of a disc which can be chucked or clamped positively with a shorter width, such as a disc in which a protuberance is formed around a centring hole on one major surface of the disc base plate, it is possible to reduce the width of chucking or clamping further, so that the optical head may be moved further towards the inner side of the disc and hence the inner diameter of the data recording region may be reduced to 28 mm. Turning again to the above conditions, if the data recording region is larger than 73 mm, the recording region is approximately of the same size as the ordinary 8 cm CD and hence the demand for size reduction of the disc recording/reproducing apparatus cannot be met sufficiently.

The present invention provides, according to yet another aspect thereof, a disc-shaped recording medium in which compressed audio data are recorded by optical means, wherein, with the inner diameter of a data recording region of a disc being set to a predetermined value within a range of 28 to 50 mm, the outer diameter of the data recording region for the inner diameter value of said data recording region of 28 mm is set in a range from 58 to 62 mm and said outer diameter for the inner diameter value of 50 mm is set in a range from 71 to 73 mm, whereby the recording medium may be used with a small-sized portable disc recording/reproducing apparatus and a playback time about as long as that of a standard 12 cm CD may be realised by recording compressed audio data having the compression ion rate of e.g. 1/4.

The invention will now be further described, by way of illustrative and non-limiting example, with reference to the accompanying drawings, in which:
Figure 1 is a graph showing a relationship between the inner diameter and the outer diameter of a data recording region of a disc-shaped recording medium embodying the invention;
Figure 2 is a plan view of a disc-shaped recording medium;
Figures 3 is a schematic plan view of the disc-shaped recording medium accommodated in a cartridge;
Figure 4 is a sectional plan view of the disc loaded on a disc table of a disc driving unit;
Figure 5 is a block diagram of a disc recording/reproducing apparatus embodying the invention;
Figures 6 shows the format of a cluster structure constituting a recording unit;
Figure 7 shows a typical data structure of a sector or block;
Figure 8 shows the contents of a sub-header;
Figure 9 shows an in-sector data structure of a so-called CD-I format;
Figure 10 shows a format of a frame and a block or sector in the CD-standard;
Figure 11 shows a data format employed in the disc recording/reproducing apparatus;
Figures 12 shows the status of a controlled memory of a recording system of the disc recording/reproducing apparatus shown in Figure 5; and
Figure 13 shows the status of a controlled memory of a reproducing system of the disc recording/reproducing apparatus shown in Figure 5.

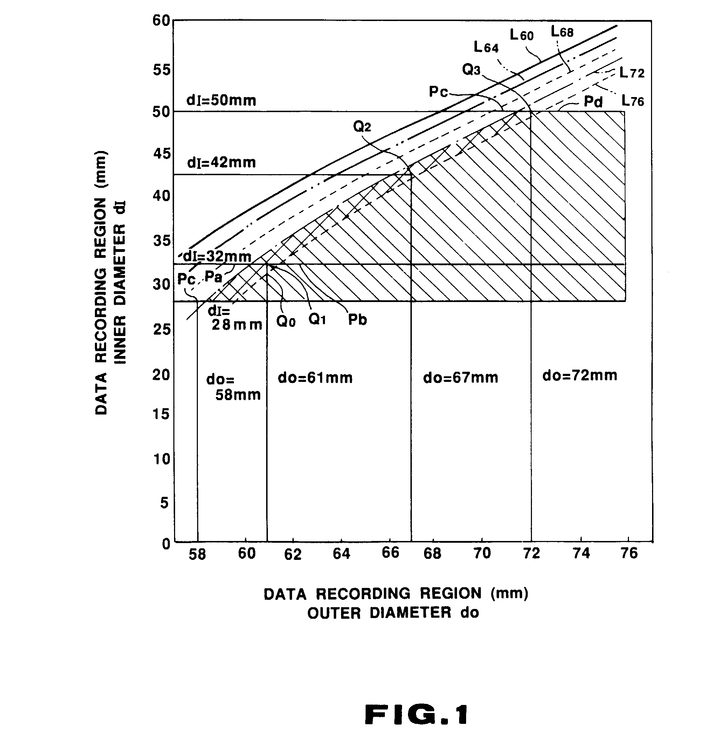

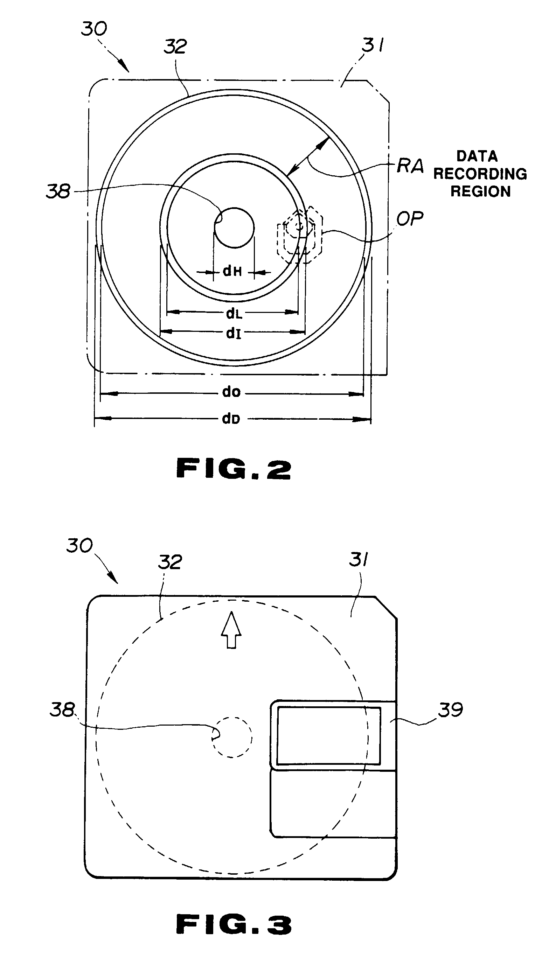

A disc-shaped recording medium embodying the invention will now be described with reference to Figures 1 to 3, in which Figure 1 shows the relationship between an inner diameter and an outer diameter of a data recording region of the recording medium, Figure 2 is a plan view of the recording medium, and Figure 3 is a schematic plan view showing the recording medium accommodated in a cartridge or caddy.

Referring to Figure 2, the disc-shaped recording medium, such as a magneto-optical disc 32, has a central hole (centring hole) 38 of a diameter dH into which a spindle (not shown) is introduced and chucked for rotationally driving the disc 32. The disc 32 is inserted into a cartridge or disc caddy 31 shown in more detail in Figure 3 to constitute a disc assembly or apparatus 30. A shutter plate 39 or the like is movably mounted on the cartridge 31.

As shown in Figure 2, the disc 32 has a data recording region RA having an inner diameter dI and an outer diameter dO. A lead-in or table of contents (TOC) region, having an inner diameter dL, is provided inwardly of the data recording region RA. A region defined between the data recording region RA and an outer periphery of the disc, which has a diameter dD, is a so-called rim region. An optical head OP shown by a broken line in Figure 2 is shown tracing an innermost track of the lead-in region (with the inner diameter dL).

Figure 1 is a graph in which the outer diameter dO and the inner diameter dI of the data recording region RA are the abscissa and the ordinate, respectively. Five curves L60, L64, L68, L72 and L76 in the Figure 1 represent relationships between the outer diameter dO and the inner diameter dI which will give recording/reproducing time durations of 60, 64, 68, 72 and 76 minutes, respectively, for the CD-I format level B stereo mode. The other conditions or parameters of the recording format of the disc are similar to those of the standard CD format (CD-DA format) and include, for example, a track pitch of 1.6 micrometres and a linear velocity of 1.2 m/s.

Although a lower limit for the inner diameter dI of the data recording region RA is preferably 28 mm, the lower limit is preferably 32 mm for a disc which is flat on both sides, similarly to the usual compact disc, in consideration of the width necessary for disc chucking and clamping and the minimum size of the optical head that may be achieved with the present status of the art. With the inner diameter dI equal to 32 mm, the inner diameter dL of the lead-in region is in the region of 30 mm. Since a diameter dH of 10 mm at most is required for the centring hole 38, a space as small as about 10 mm may be conserved on one side of the centring hole 38 between the centring hole 38 and the inner periphery of the lead-in region. Since an allowance for chucking and clamping is required in the proximity of the centring hole 38, the size of the optical head between the centre and its outer wall is limited to 10 mm less the above-mentioned width for chucking and clamping, which is close to the minimum size of the optical head that may be realised at the present time. In the light of the foregoing, it is desirable in this case to set a lower limit of the inner diameter dL of the lead-in region and a lower limit of the inner diameter dI of the data recording region RA to about 30 mm and 32 mm, respectively.

An upper limit of the inner diameter dI of the data recording region RA is set so as to be equal to the inner diameter of the standard CD data recording region, or 50 mm, in view of the fact that a size in excess of the standard CD size gives rise to no particular merit but results only in a reduced recording capacity.

Thus, it is preferred that the inner diameter dI of the data recording region RA be selected within a range of 32 mm to 50 mm.

The outer diameter dO of the data recording region RA may be determined in dependence upon the inner diameter dI by taking account of the required value of the recording capacity. With present data compression technology, the data compression factor or ratio (rate) which will provide the necessary sound quality, for example the sound quality of an FM broadcast level, is about 1/4 or fourfold at most, such that, for example, the above-mentioned level B stereo mode is most desirable. With the other conditions being the same as those for the standard CD, and with the linear velocity being 1.2 m/s, the relationship between the recording/reproducing time and the inner and outer diameters of the data recording region is as shown by the curves L60 to L76 in Figure 1. An index of a recording/reproducing time most desirable for the user is the recording time for a symphony of classical music, that is a recording/reproducing time of 74 minutes at the maximum, which is almost equal to that of the currently available 12 cm CD. It will be noted that the diameters dO to dI for which a minimum recording/reproducing time of 72 to 76 minutes may be ensured are encompassed by a region shown cross-hatched in Figure 1. If an increase or decrease in the data recording capacity, due to changes in the recording conditions or the like, it taken into account, it is preferred to set the outer diameter dO of the data recording region RA so as to be in a range of from 60 to 62 mm (a range between points Pa and Pb in Figure 1) and in a range of from 71 to 73 mm (a range between points Pc and Pd in Figure 1) for inner diameters dI of the data recording region RA of 32 mm and 50 mm, respectively.

As a particular example, one of most desirable sets of values is:
inner diameter dI of the region RA = 32 mm; and
outer diameter dO of the region RA = 61 mm, as shown at a point Q₁ in Figure 1. The other sizes may then, for example, be:
diameter dH of the centring hole dH = 10 mm;
inner diameter dL of the lead-in region = 30 mm; and
outer diameter dD of the disc = 64 mm.

If the disc is accommodated in a cartridge or caddy 31 having a size of 70 mm x 74 mm and presented in this state to the market, recording and/or reproduction on or from the disc becomes possible with an ultra-small pocket size recording/reproducing apparatus.

As another example of desirable values for the size of the data recording region RA:
inner diameter dI of the data recording region RA = 42 mm; and
outer diameter dO of the data recording region RA : = 67 mm, as shown at a point Q₂ in Figure 1.

In this case, the other sizes may be selected so that:
inner diameter dL of the lead-in region = 40 mm; and
outer disc diameter dD = 70 mm.

Alternatively, the diameters dI and dO may be selected so that:
inner diameter dI of the data recording region RA = 50 mm; and
outer diameter dO of the data recording region RA = 72 mm, as shown at a point Q₃ in Figure 1.

In this case, the other sizes may be selected so that, for example:
inner diameter dL of the lead-in region = 46 mm; and
outer disc diameter dD = 76 mm.

It is to be noted that a variety of combinations other than those specified above are possible as long as the above-mentioned size conditions are satisfied.

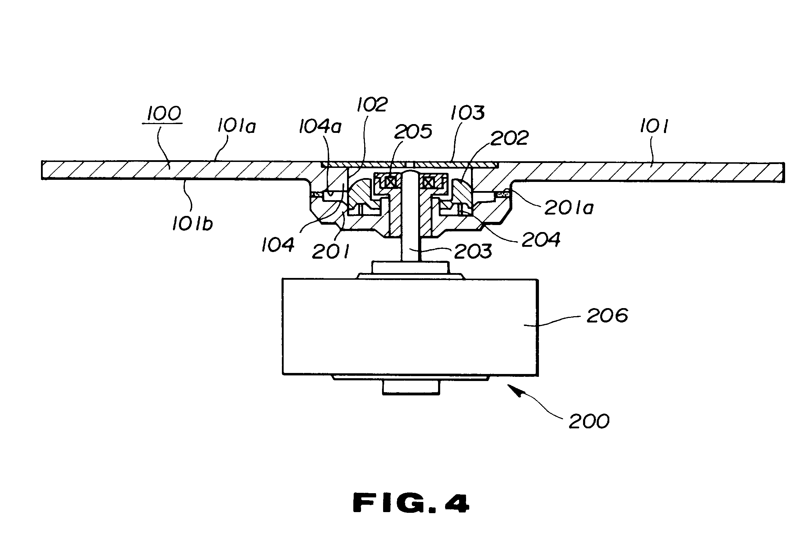

The above conditions are those for a disc in the form of a flat plate similar to a compact disc. However, if the disc is of a structure in which chucking and clamping may be achieved reliably with a shorter width, the inner diameter dI of the data recording region RA may be diminished to a value in the region of 28 mm at the minimum. A typical example of such an arrangement is a recording disc arranged as shown in Figure 4. This example will now be described with reference to Figure 4.

Referring to Figure 4, the disc-shaped recording medium is a magneto-optical disc 100, and a magnetic metal plate 103 placed on one major surface of the disc is attracted by a magnet 205 placed on a disc table 201 of a disc driving unit 200 for clamping the magneto-optical disc 100 onto the disc table 201.

The magneto-optical disc 100 employed in the disc loading system taking advantage of the attractive force of a magnet includes a disc base plate 101 moulded from a transparent synthetic resin, such as polycarbonate resin, into the shape of a disc. An information signal recording layer for recording information signals is deposited on one major surface 101a of the disc base plate 101. The other surface 101b of the disc base plate 101, opposite to the surface 101a of the disc base plate 101 of the magneto-optical disc 100 carrying the information signal recording layer, is an information signal write-read surface, and a light beam is irradiated onto the signal recording layer from the write-read surface side for recording and/or reproducing the information signals.

The disc base plate 101 has centring hold 102 engaged by a centring member 202 operative to bring the centre of rotation of the magneto-optical disc 100 onto coincidence with the axis of rotation of the disc table 201 of the disc driving unit 200 when the disc is loaded on the disc table 201. The magnetic metal plate 103 is in the form of a flat disc and is affixed to a mid portion of the major surface 101a of the disc base plate 101, such as by an adhesive, for closing the centring hole 102.

If the disc base plate 101 of the magneto-optical disc 100 has a reduced thickness in the region of 1,2 mm, the centring hole 102 engaged by the centring member 202 provided on the disc table 201 cannot be of a sufficient depth. In addition, since the metal plate 103 is provided on the major surface 101a of the disc base plate 100 for closing the centring hole 102, the centring member 202 engaging in the centring hole 102 cannot be of a sufficient height.

The centring member 202 operative to bring the centre of rotation of the magneto-optical disc 100 into coincidence with the axis of rotation of the disc table 201 on loading of the magneto-optical disc 100 onto the disc table 201 is mounted so as to be reciprocable axially of a driving shaft 203 supporting the disc table 201 and be biased by a coil spring 204 towards the distal end of the driving shaft 203. When the magneto-optical disc 100 is being loaded onto the disc table 201, the centring member 202 is advanced axially of the driving shaft 203 under the load of the magneto-optical disc 100 against the bias of the coil spring 204 into engagement with the centring hole 102 for centring the magneto-optical disc 100 with respect to the disc table 201.

For ensuring such centring operation, the centring member 202 is of a sufficient height to provide a larger stroke of relative movement between the magneto-optical disc 100 and the centring member 202. That is, the other major surface 101b of the disc base plate 101 opposite to the major surface 101a provided with the metal plate 103 is formed with an annular projection 104 surrounding the centring hole 102 to provide for a sufficient depth of the centring hole 102 and a sufficient height of the centring member 202 to ensure positive centring.

The magneto-optical disc 100, thus centred by the centring member 202 and loaded in this state on the disc table 201, has an end face of the annular projection 104 acting as a loading reference surface or plane 104a, and is loaded on the disc table 201 with the loading reference surface 104a resting on a disc receiving surface 201a of the disc table 201. When loaded on the disc table 201, the magneto-optical disc 100 is clamped by the metal plate 103 being attracted by the magnet 205 arranged on the disc table 201 and is driven into rotation in unison with the disc table 201 by a driving motor 206.

With the use of the above-described disc-shaped recording medium 100, since a narrower or smaller clamping width suffices for clamping the disc, the inner diameter dI of the data recording region may be reduced to a value in the region of 28 mm. The fact that the inner diameter dI of the data recording region may be located at a more inward location of the disc is desirable from the point of view that a disc area with satisfactory characteristics may be utilised effectively. It is to be noted that, when moulding a resin to form a disc, resin is injected at a mould portion facing an inner portion of the disc. While it is extremely difficult to cure the disc in its entirety after resin injection, and it is generally the case that the rim of the disc is cured first and lowered in characteristics, such as due to bifringence, warping or deterioration in impurity concentration, the inner disc area exhibits satisfactory characteristics, so that it is desirable to utilise this inner disc area effectively. If, in view of possible increase or decrease of the data recording capacity caused by changes in the recording conditions or the like, the inner diameter dI of the data recording region is set to 28 mm, it suffices to set the minimum value of the outer diameter dO to 58 mm, as shown at the point Pc in Figure 1.

The following is an example of various sizes which are most desirable when using the disc designed to employ the above-described clamping system.

In the first place, the diameter of the centring hole 102 is enlarged to, for example, 11 mm for enlarging the area of the metal plate 103 facing the magnet 205 to ensure positive clamping. By selecting the end face 104a of the projection 104 as the loading reference plane for positioning the disc 100 in height during disc loading, the range of travel of the optical head is extended towards an inner region. The inner diameter dI of the data recording area region is set to 31 mm. The outer diameter dO of the data recording area in this case is, for example, 61 mm. A point Q in Figure 1 is a point satisfying the above conditions for the inner diameter dI and the outer diameter dO. A lead-in region having a width of 1.5 mm is formed on the inner side of (i.e. inwardly of) the data recording region having an inner diameter of 31 mm, and lead-in data are recorded as prepits in the lead-in region. A lead-out region having a width of 0.5 mm is formed on the outer side of the data recording region having an outer diameter of 61 mm and lead-in data are recorded as prepits in the lead-out region.

The above-described magnetic clamping system may be used in conjunction not only with the magneto-optical disc 100, but also with various other discs, such as an optical disc having an aluminium reflective surface similar to the conventional compact disc.

The cross-hatched region in Figure 1 represents combinations of the diameters dI and dO which may be adopted when a recording/reproducing time longer than the above-mentioned maximum time duration of 72 to 76 minutes is desired or when the data compression rate is to be lowered to improve the sound quality.

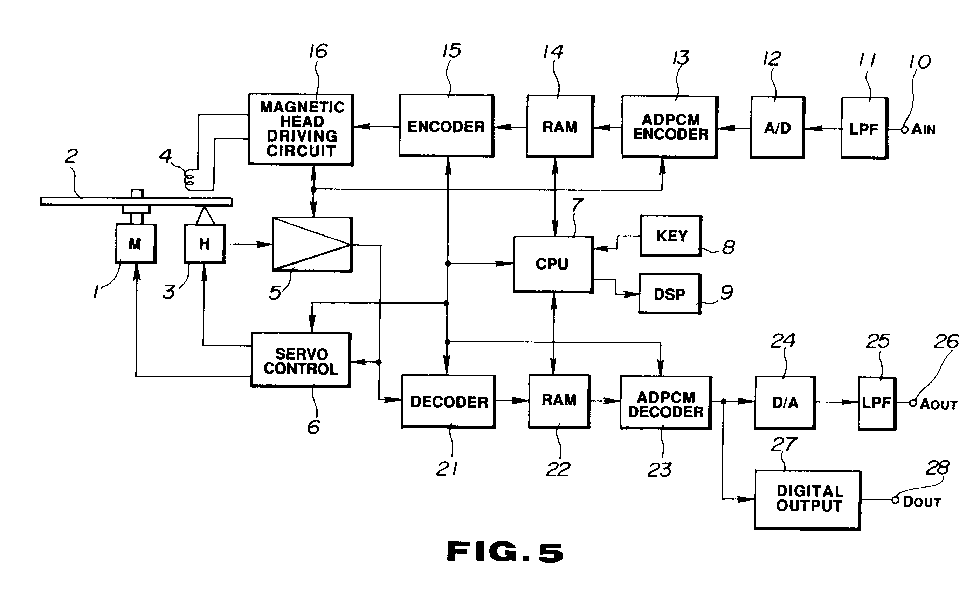

An example of a disc recording/reproducing apparatus employing the above-described disc-shaped recording medium will now be described with reference to Figure 5, which shows schematically the arrangement of the disc recording/reproducing apparatus.

In the disc recording/reproducing apparatus shown in Figure 5, a magneto-optical disc 2 rotationally driven by a spindle motor 1 is employed as a recording medium. While the disc 2 is irradiated with laser light by an optical head 3, a modulating magnetic field corresponding to recording data (data to be recorded) is applied by a magnetic head 4 to the disc 2 for recording data along a recording track of the disc 2, by way of so-called magnetic field modulation recording. On the other hand, the recording track of the disc 2 is traced with laser light by the optical head 3 for photomagnetically reproducing the recorded data.

The optical head 3 is constituted by a laser light source such as a laser diode, optical components such as a collimator lens, an object lens, a polarisation beam splitter or a cylindrical lens, and a split photodetector, and is arranged to face the magnetic head 4 with the disc 2 in between them. For recording data on the disc 2, the optical head 3 irradiates a target track on the magneto-optical disc 2 with laser light for recording data by thermomagnetic recording. The modulating magnetic field corresponding to the recording data is applied to the target track by the magnetic head 4, which is driven by a head driving circuit 16 of a recording system which will be described subsequently. The optical head 3 detects laser light irradiated on and reflected by the target track for detecting focusing error by a so-called so-called astigmatic method as well as detecting tracking error by a push-pull method. When reproducing data from the disc 2, the optical head 3 detects the difference of a polarisation angle (Kerr rotation angle) of the reflected laser light from the target track to produce a playback signal.

An output of the optical head 3 is supplied to a radio frequency (RF) circuit 5. The RF circuit 5 extracts a focusing error signal and a tracking error signal from the output of the optical head 3 and transmits the extracted signals to a servo control circuit 6 while converting the reproduced signal into corresponding binary signals and supplying the binary signals to a decoder 21 of a reproducing system, which will be described subsequently.

The servo control circuit 6 is constituted by a focusing servo circuit, a tracking servo circuit, a spindle motor servo control circuit and a thread servo control circuit. The focusing servo control circuit executes focusing control of an optical system of the optical head 3 so that the focusing error signal is reduced to zero. The tracking servo control circuit executes tracking control of the optical system of the optical head 3 so that the tracking error signal is reduced to zero. The spindle motor servo control circuit controls the spindle motor 1 for rotationally driving the disc 2 at a predetermined rotational velocity, such as at a constant linear velocity. The thread servo control circuit causes the optical head 3 and the magnetic head 4 to be moved to a target track position on the disc 2 as designated by a system controller (central processing unit or "CPU") 7. The servo control circuit 6, which performs these various control operations, transmits information indicating operating states of components controlled by the servo control circuit 6 to the system controller 7.

Although the present disc recording/reproducing apparatus has been described with reference to recording and reproduction of the B-level stereo mode adaptive differential pulse code modulated (ADPCM) audio data, the present invention may also be applied to recording and/or reproduction of other mode ADPCM audio data in other CD-I systems.

With the above-described disc-shaped recording medium embodying the invention, the inner diameter of the data recording region or area is set to 32 to 50 mm, and the outer diameter of the data recording region or area for the inner diameter of 32 mm is set to 60 to 62 mm and the outer diameter of the data recording region or area for the inner diameter of 50 mm is set to 71 to 73 mm, so that the recording medium may be used with a small-sized portable disc recording/reproducing apparatus, while compressed audio data with the compression ratio of 1/4 are recorded on the recording medium to realise a playback time about as long as that of a standard 12 cm CD. That is, when recording compressed audio data with the compression ratio of 1/4, a track pitch of 1.6 micrometres and a linear velocity of 1.2 to 1.4 m/s, the recording/reproducing time may amount to about 60 minutes at the minimum and to about 72 to 76 minutes on average.

A key input operating section 8 and a display section 9 are connected to the system controller 7. The system controller 7 controls the recording system and the reproducing system to adopt an operating mode designated by operating input information from the key input operating section 8. The system controller 7 supervises, on the basis of sector-by-sector address information reproduced from the recording track of the magneto-optical disc 2 by header time or sub-Q data, the recording position as well as the reproducing position on the recording track traced by the optical head 3 and the magnetic head 4. The system controller 7 causes a bit compression mode to be displayed on the display section 9 on the basis of bit compression mode data in the reproduced data obtained from the RF circuit 5 by means of the reproducing system as later described, or of bit compression mode data in an ADPCM encoder 13 switchingly selected by the key input operating section 8. The system controller 7 also causes the playback time to be displayed on the display section 9 on the basis of a data compression ratio and the reproducing position data on the recording track in the bit compression mode.

For displaying the playback time, the sector-by-sector address information (absolute time information) reproduced from the recording track of the magneto-optical disc 2 with the head time or sub-Q data, is multiplied by the reciprocal of the data compression ratio in the bit compression mode (four in the case of 1/4 compression) to find an actual time information for display on the display section 9. It is to be noted that, if absolute time information has been recorded (preformatted) on a recording track of a magneto-optical disc, the preformatted absolute time information may be read during recording and multiplied by the reciprocal of the data compression ratio for display of the current position in the form of the actual recording time.

It is noted that the recording system of the disc recording/reproducing apparatus is provided with an analogue-to-digital (A/D) converter 12 to which an analogue audio signal AIN is supplied from an input terminal 10 by way of a low-pass filter (LPF) 11.

The A/D converter 12 quantises the audio signal AIN. The digital audio data thereby provided by the A/D converter 12 is transmitted to the adaptive differential pulse code modulating encoder (ADPCM encoder) 13. The ADPCM encoder 13 processes the prescribed transfer rate digital audio data quantised from the audio signal AIN by subjecting it to a data compressing operation in conformity with the various modes in the CD-I system shown in Table 1, and has its operating mode designated by the system controller 7. For example, in the B-level mode of Table 1, the digital audio data are processed into compressed data (ADPCM audio data) having a poling frequency of 37.8 kHz and a number of bits per sample equal to 4, before being supplied to a memory, for example a random access memory (RAM) 14. The data transfer rate with the B-level stereo mode is reduced to 18.75 sectors/second.

In the embodiment of Figure 5, it is assumed that the sampling frequency of the A/D converter 12 is fixed at the poling frequency of the standard CD-DA format, or 44.1 kHZ, and that, in the ADPCM encoder 13, bit compression from 16 bits to 4 bits is performed after conversion of the sampling rate in conformity with the compression mode, for example from 44.1 kHz to 37.8 kHz for level B. Alternatively, the poling frequency of the A/D converter 12 itself may be switchingly controlled as a function of the compression mode. In this case, the cut-off frequency of the low-pass filter 11 is also switchingly controlled as a function of the switchingly controlled sampling frequency of the A/D converter 12. That is, the poling frequency of the A/D converter 12 and the cut-off frequency of the low-pass filter 11 may be simultaneously controlled in dependence upon the compression mode.

The memory 14 is used as a buffer memory in which data writing and readout are controlled by the system controller 7 and which transiently stores ADPCM audio data supplied from the ADPCM encoder 13 for continuous recording on the disc as the occasion may demand. That is, in the B-level stereo mode, the compressed audio data supplied from the ADPCM encoder 13 has its transfer rate reduced to 18.75 sectors/second, these compressed data being continuously written in the memory 14. Although it suffices to record the compressed data (ADPCM data) at a rate of every four sectors, as explained hereinbefore, it is in practice generally impossible to record the data at this rate on a real time basis, as a consequence of which the sectors are recorded continuously as later explained. Such recording is performed in a burst fashion (discontinuously) at a standard data transfer rate of 75 sectors/second, by taking advantage of a quiescent period, with a cluster, composed of a predetermined number of sectors, e.g. 32 sectors, as a data recording unit. That is, in the memory 14, the B-level stereo mode ADPCM audio data, which has been continuously written at the lower transfer rate of 18.75 (=75/4) sectors/second conforming to the data compression ratio, is read out as recording data in a burst fashion at the above-mentioned transfer rate of 75 sectors/second. The overall data transfer rate of the data read out and recorded in this way, inclusive of the non-recording period, is a lower rate of 18.75 sectors/second. However, the instantaneous data transfer rate during the burst-like recording operations is equal to the above-mentioned standard rate of 75 sectors/second. Therefore, if the rotational velocity of the disc is the same as that of the standard CD-DA format, that is, a constant linear velocity, recording is made at the same recording density and with the same recording pattern as those of the CD-DA format.

The ADPCM audio data read out from memory 14 in a burst fashion at the transfer rate of 75 sectors/second, that is the recording data, is supplied to an encoder 15. With a data string supplied from the memory 14 to the encoder 15, a data unit continuously recorded with each recording is composed of a plurality of sectors, e.g. 32 sectors, and a few cluster-linking sectors arrayed before and after the cluster. The cluster-linking sector has a length greater than the interleaving length at the encoder 15 so that, even when the sector undergoes interleaving, data of other clusters remain unaffected. Details of recording on the cluster-by-cluster basis will be discussed later with reference to Figure 5.

The encoder 15 processes the recording data supplied in burst fashion from the memory 14 with an error correcting coding operation, such as by parity addition or interleaving, or eight-to-fourteen modulation (EFM). The recording data, thus encoded by the encoder 15, is supplied to the magnetic head driving circuit 16.

The magnetic head driving circuit 16 is connected to the magnetic head 4 and drives the magnetic head 4 to apply the modulating magnetic field conforming to the recording data to the magneto-optical disc 2.

The system controller 7 performs a recording position controlling operation for the memory 14 and, based on the controlling operation, performs disc recording position control so that the above-mentioned recording data read out in a burst fashion from the memory 14 will be recorded continuously on the recording track of the magneto-optical disc 2. For the recording position control, the record position of the recording data read out in burst fashion from the memory 14 is supervised by the system controller 7, and control signals designating the record position on the recording track of the magneto-optical disc 2 are supplied to the servo control circuit 6.

The reproducing system of the disc recording/reproducing apparatus will now be described.

The reproducing system is operative to reproduce data continuously recorded by the above-described recording system on the recording track of the magneto-optical disc 2, and is provided with the decoder 21 which receives the playback output generated by the optical head 3 tracing the recording track on the magneto-optical disc 2 with laser light, and which has been converted into binary format by the RF circuit 5.

The decoder 21 is associated with the encoder 15 in the above-described recording system, and processes the playback output, converted into binary format by the RF circuit 5, with the above-mentioned decoding for error correction and EFM decoding, and reproduces the above-mentioned B level stereo mode ADPCM audio data at a transfer rate of 75 sectors/second, which is faster than the normal transfer rate in the above-mentioned B level stereo mode. The reproduced data produced by the decoder 21 is supplied to a memory, for example a random access memory (RAM), 22.

The memory 22 has its data writing and readout controlled by the system controller 7 so that the playback data supplied from the decoder 21 at a transfer rate of 75 sectors/second is written in a burst fashion at the transfer rate of 75 sectors/second. Also, the playback data written in a burst fashion at the transfer rate of 75 sectors/second in the memory 22 are continuously readout therefrom at the usual B-level stereo mode speed of 18.75 sectors/second.

The system controller 7 also performs a memory control of writing of the reproduced data in the memory 22 at the transfer rate of 75 sectors/second, and continuously reading out the playback data from the memory 22 at the transfer rate of 18.75 sectors/second.

The system controller 7 performs, besides the above-mentioned memory control operation for the memory 22, reproducing position control from the recording track of the magneto-optical disc 2, in such a manner that the playback data written in a burst fashion by the above-mentioned memory control of the memory 22 is reproduced continuously from the recording track of the disc 2. The reproducing position control is performed by supervising a reproducing position on the disc of the above-mentioned playback data written in a burst fashion in the memory 22 by the system controller 7 and by supplying a control signal designating the reproducing position on the recording track of the magneto-optical disc 2 to the servo control circuit 6.

The B-level stereo mode ADPCM audio data, obtained as playback data read out continuously from the memory 22 at a transfer rate of 18.75 sectors/second, are supplied to an ADPCM decoder 23.

The ADPCM decoder 23 is associated with the ADPCM encoder 13 of the recording system, and has its operating mode designated by the system controller 7. With the present disc recording/reproducing apparatus, the B-level stereo mode ADPCM audio data are expanded by a factor of four for reproducing the digital audio data. The reproduced digital audio data is transmitted by the ADPCM decoder 23 to a digital-to-analogue (D/A) converter 24.

The D/A converter 24 causes the digital audio data supplied from the ADPCM decoder 23 to be converted into an analogue audio signal AOUT. The analogue audio signal AOUT from the D/A converter 24 is outputted via a low-pass filter 25 at an output terminal 26.

The reproducing system of the disc recording/reproducing apparatus of the present embodiment is provided with a digital outputting function in that the digital audio data at the output of the ADPCM decoder 23 is outputted at a data output terminal 28, via a digital output encoder 27, as a digital audio signal DOUT.

The recording/reproducing operation performed by the above-described disc recording/reproducing apparatus will now be explained in more detail.

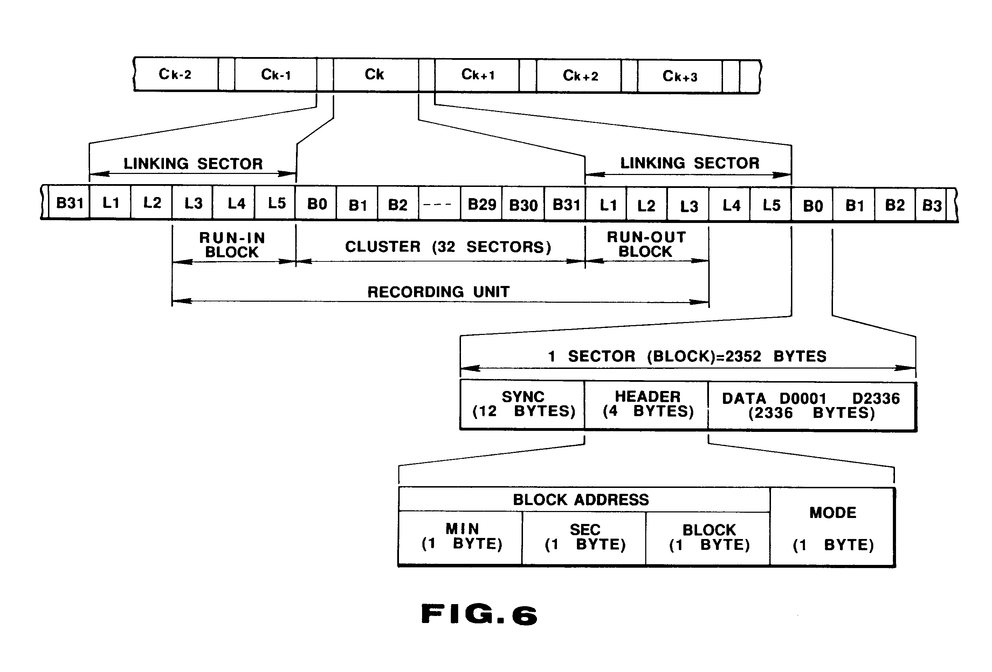

The recording data, that is data read out from the memory 14, is arranged into a cluster at an interval of a predetermined number of sectors or blocks, e.g. 32, and several cluster-linking sectors are arrayed between adjoining clusters. In more detail, referring to Figure 6, each cluster Cₙ consists of 32 sectors or blocks B0 to B31, and five linking sectors L1 to L5 are arranged between the clusters Cₙ for linking adjoining clusters. For recording a cluster, such as a k'th cluster Cₖ, the 32 sectors B0 to B31 of the cluster Cₖ and the linking clusters ahead and behind the cluster Cₖ, namely the three sectors L3 to L5 in the direction towards the cluster Cₖ₋₁ (run-in blocks) and the three blocks L1 to L3 in the direction towards the cluster Cₖ₊₁, making a total of 38 sectors, are recorded as one unit. The 38-sector recording data are transmitted from the memory 14 to the encoder 15 where interleaving is carried out for data rearrangement over a distance of up to 108 frames corresponding to about 1.1 sectors. However, the data within the cluster Cₖ are safely contained within a range from the run-in blocks L3 to L5 to the run-out blocks L1 to L3 without affecting the remaining clusters Cₖ₋₁ or Cₖ₊₁. Dummy data, such as 0, are arrayed in the linking sectors L1 to L5 to avoid adverse effects which interleaving might have on the data per se. When recording the next cluster Cₖ₊₁, three sectors L3 to L5 of the five linking sectors L1 to L5 between the current cluster and the next cluster Cₖ₊₁ are used as the run-in blocks, so that the sector L3 is recorded superfluously without causing any inconvenience. The sector L3 of the run-in block or the sector L3 of the run-out block may be omitted, so that recording may be performed with the remaining 37 sectors as a unit.

By virtue of such recording on a cluster-by-cluster basis, there is no need to take account of interference with the adjoining clusters caused by interleaving, so that data processing may be significantly simplified. On the other hand, if it should be impossible to record the recording data normally due to malfunctions, such as defocusing, detracking, etc., re-recording may be effected on the cluster-by-cluster basis and, if it should be impossible to reproduce the recorded data effectively, re-reading may be effected on the cluster-by-cluster basis.

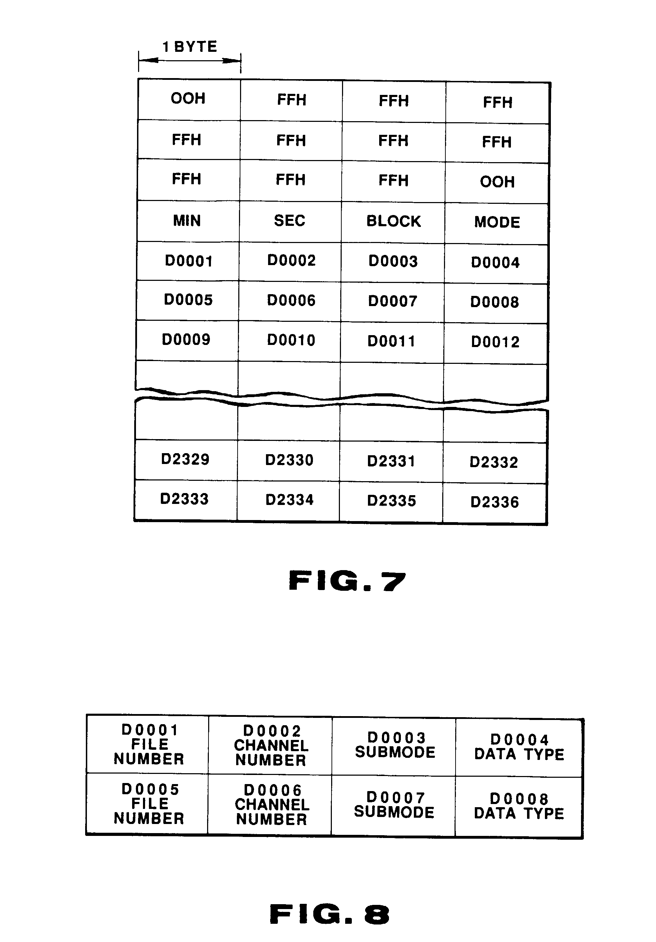

Each sector or block consists of 12 synchronising bytes, 4 header bytes and 2336 bytes of data per se D0001 to D2336, arrayed in this order, making a total of 2352 bytes. This sector or block array is represented as a two-dimensional array, as shown in Figure 7, wherein the 12 synchronisation bytes consist of the first byte OOH, ten bytes FFH and the last byte OOH in the hexadecimal system (H is a hexadecimal number). The next 4-byte header consists of address parts for minute, second and block, each of one byte, and a mode data byte. These mode data mainly indicate a CD-ROM mode, while a sector structure shown in Figures 6 and 7 corresponds to Mode 2 of the CD-ROM format. The CD-I is a standard employing Mode 2 and the contents of the data D0001 to D0008 are prescribed to be as shown in Figure 8.

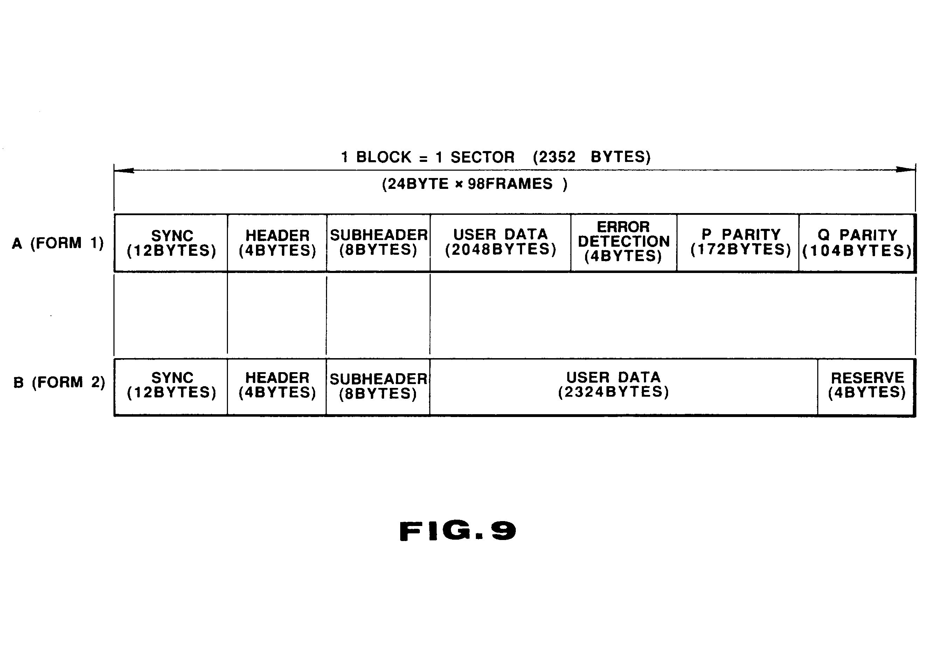

Figure 9 shows Forms 1 and 2 of the CD-I standard, in which 12 synchronising bytes and 4 header bytes are the same as those of the CD-ROM Mode 2 shown in Figures 6 and 7. The next 8 subheader bytes are prescribed to be as shown in Figure 8, wherein data D0001 and D0005 are file numbers, data D0002 and D0006 are channel numbers, data D0003 and D0007 are subcode data and data D0004 and D0008 are data type data. The data D0001 to D0004 and the data D0005 to D0008 are the same data written in duplicate. The next 2328 bytes consist of 2048 user data bytes, four error-detecting bytes, 172 P parity bytes and 104 Q parity bytes, for Form 1 as shown at A in Figure 9. This Form 1 is used for recording letter data, binary data and high compression video data. The 2328 bytes for Form 2 as shown at B in Figure 9 consist of 2324 user data bytes, downstream of the sub-header data, and the remaining 4 bytes are reserve data bytes. This Form 2 is used for recording compressed audio data or video data. In the case of compressed audio data, 18 128-byte sound groups (2304 bytes) are arrayed in the 2324 user data bytes, with the remaining 20 bytes representing a vacant space.

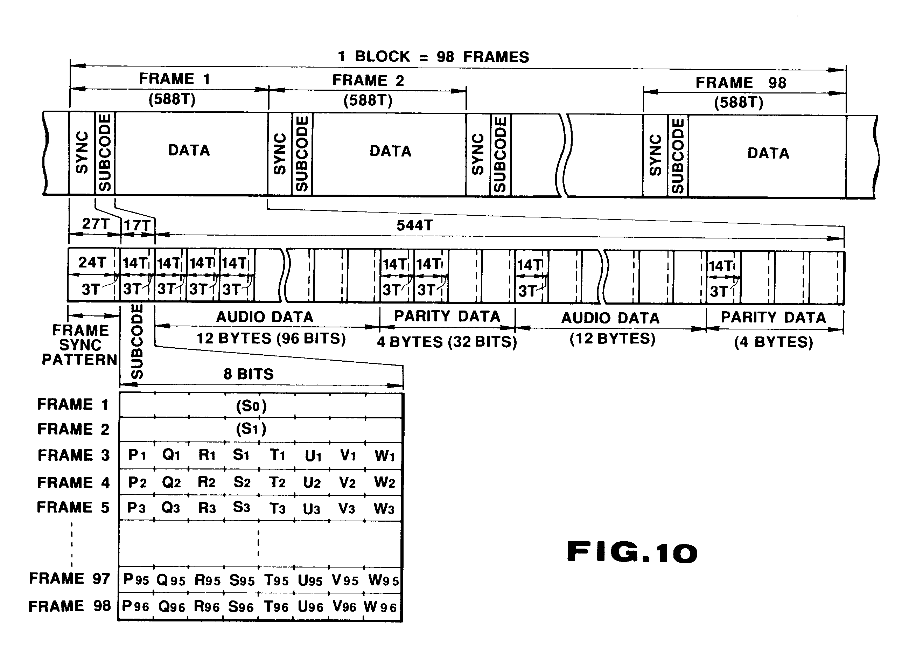

When recording the above-described sector-based data on a disc, a coding operation such as parity addition or interleaving or EFM encoding is carried out by the encoder 15, so that recording is performed with a recording format shown in Figure 10.

Referring to Figure 10, each block or sector consists of 98 frames (Frames 1 to 98), with each frame having a duration (588T) equal to 588 times a channel clock period T. Within each frame, there are a frame synchronising pattern part having a duration of 24T (plus 3T for linking), a subcode part having a duration of 14T (plus 3T for linking) and a data part having a duration of 544T (for audio data and parity data). The 544T data part consists of 12 bytes or symbols of audio data, 4 bytes of parity data, 12 bytes of audio data and 4 bytes of parity data which have been processed by EFM (eight-to-fourteen modulation). Audio data in each frame is constituted by 24 bytes or 12 words, because each word of the audio sample data consists of 16 bits. The subcode part is the 8-bit subcode data which has undergone EFM and is arrayed in a block with 98 frames as a unit, each bit constituting one of eight subcode channels P to W. The subcode parts of the first and second frames are block synchronisation patterns S0 and S1 which violate the EFM rule, each of the subcode channels P to W being constituted by 96 bits for the third to 98th frames.

The above-mentioned audio data, recorded after interleaving, are deinterleaved during reproduction into audio data of a data array conforming to the usual time sequence. The CD-I data, such as are shown in Figures 7 and 9, may be recorded in place of the audio data.

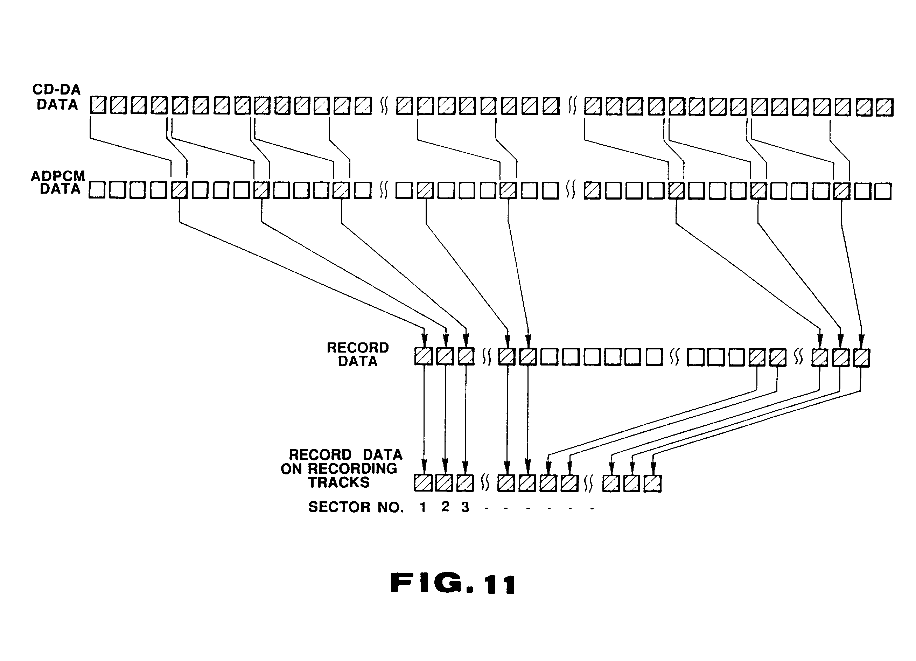

The digital data obtained at the A/D converter 12 in the disc recording/reproducing apparatus shown in Figure 5 are data similar to those of the CD-DA format, that is audio PCM data with a sampling frequency of 44.1 kHz, a number of quantisation bits equal to 16, and a data transfer rate of 75 sectors/second, as shown in Figure 11. When the data is transmitted to the ADPCM encoder 13 so as to be bit-compressed to the above-mentioned stereo mode, the digital data are converted into data with a sampling frequency of 37.8 kHz and the number of quantisation bits is compressed to four bits. Thus, the output data are ADPCM audio data having a data transfer rate reduced by 1/4, that is to 18.75 sectors/second. The B level stereo mode ADPCM audio data, continuously outputted at a transfer rate of 18.75 sectors/second from the ADPCM encoder 13, are supplied to the memory 14.

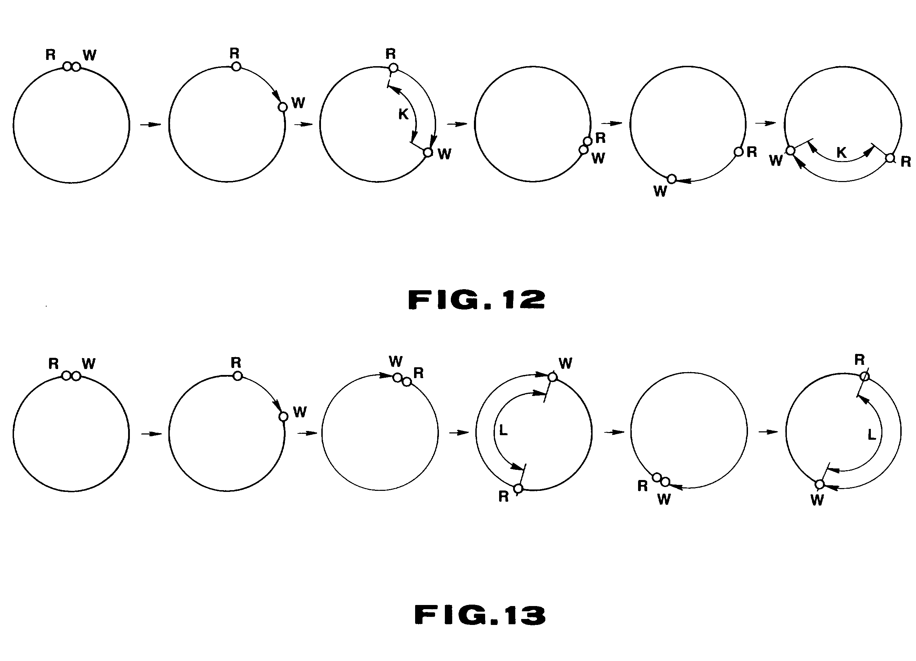

Referring to Figure 12, the system controller 7 controls the memory 14 in such a manner that a write pointer W of the memory 14 is continuously incremented at a transfer rate of 18.75 sectors/second so as continuously to write the ADPCM audio data in the memory 14 at a transfer rate of 18.75 sectors/second and, when the data volume of the ADPCM audio data stored in the memory 14 exceeds a predetermined volume K, a read pointer R of the memory 14 is incremented in a burst fashion at the transfer rate of 75 sectors/second to read out a predetermined volume K of the ADPCM data in a burst fashion from the memory 14 as recording data at the above-mentioned transfer rate of 75 sectors/second. It is to be noted that the above-mentioned predetermined volume K has one-cluster data as a unit.

That is, in the recording system of the disc recording/reproducing apparatus shown in Figure 5, the ADPCM audio data continuously outputted at the transfer rate of e.g. 18.75 sectors per second from the ADPCM encoder 13 are written in the memory 14 at the above-mentioned transfer rate of 18.75 sectors/second. When the data volume of the ADPCM data stored in the memory 14 exceeds the predetermined data volume K, the data volume K of the ADPCM audio data is read out in a burst fashion from the memory 14 at the transfer rate of 75 sectors/second as recording data, so that input data can be continuously written in the memory 14 while a data write region in excess of a predetermined volume is perpetually maintained within the memory 14. By recording the recording positions on the recording track of the magneto-optical disc 2 under control by the system controller 7, the recording data read out in a burst fashion from the memory 14 can be recorded consecutively on the recording track on the magneto-optical disc 2. Since a data vacant region in excess of a predetermined volume is maintained in the memory 14, data can be continuously written in the data-depleted region in excess of the predetermined volume even if the system controller 7 detects that a track jump etc has occurred due to disturbances or the like to discontinue a recording operation on the magneto-optical disc 2, and the resetting operation may be carried out in the interim. Thus, input data can be continuously recorded without dropout on the recording track of the magneto-optical disc 2.

Header time data corresponding to the physical address of the sectors are annexed to the ADPCM audio data on a sector-by-sector basis, and recorded on a sector-by-sector basis on the magneto-optical disc 2. Table of contents data indicating the recording region and the recording mode are recorded in a table-of-contents region.

In the reproducing system of the disc recording/reproducing apparatus shown in Figure 5, the system controller 7 controls the memory 22 in such a manner that, as shown in Figure 13, the write pointer W of the memory 22 is incremented at a transfer rate of 75 sectors/second to write the reproduced data in the memory 22 at the transfer rate of 75 sectors/second, the read pointer R of the memory 22 is continuously incremented at a transfer rate of 18.75 sectors/second to continuously read out the playback data from the memory 22 at the transfer rate of 18.75 sectors/second, and the write pointer W of the memory 22 is intermittently incremented at the transfer rate of 75 sectors/second in a burst fashion so that, when the write pointer W catches up with the read pointer R, writing is discontinued. When the data volume of the playback data stored in the memory 22 is lower than the predetermined volume L, writing is started again.

Thus, with the above-described reproducing system of the disc recording/reproducing apparatus, the system controller 7 controls the memory 22 in such a manner that the B-level stereo mode ADPCM audio data reproduced from the recording track of the magneto-optical disc 2 is written in a burst fashion in the memory 22 at a transfer rate of 75 sectors/second, and read out continuously from the memory 22 as playback data at the transfer rate of 18.75 sectors/second, so that the playback data may be continuously read out from the memory 22 while the data vacant region in excess of the predetermined volume L is perpetually maintained within the memory 22. Also, the playback data intermittently read out from the magneto-optical disc 2 may be continuously reproduced from the recording track on the magneto-optical disc 2 by controlling the reproducing position on the recording track of the magneto-optical disc 2 by the system controller 7. In addition, the data read-out region in excess of the predetermined volume L is perpetually maintained in the memory 22, as described previously, that, even when the system controller 7 detects the occurrence of a track jump etc. due to, for example, disturbances, and the operation of reproducing the magneto-optical disc 2 is discontinued, the playback data may be read out from the data readout region having a space in excess of the predetermined data volume to continue the outputting of the analogue audio signals and the resetting operation may be executed in the interim.

## Claims

1. A disc-shaped recording medium (32, 100) in which:
compressed audio data are recorded at a track pitch of 1.6 micrometres and a linear velocity of 1.2 to 1.4 m/s:
the recorded data are compressed by a ratio at least approximately equal to 1/4;
the data are recorded in sectors each comprising synchronising data, header data and user data; and
the inner diameter (dI) of a data recording region (RA) of the medium is set to a predetermined value within a range of 28 to 50 mm, and the outer diameter (dO) of the data recording region (RA) is related to the inner diameter (dI) such that the intersection of an ordinate and an abscissa representing the inner and outer diameters (dI, dO), respectively, on the graph depicted in Figure 1 of the accompanying drawings falls within the cross-hatched area, namely the area bounded by the curves L72 and L76 and the limit ordinate values dI =28 mm and dI=50mm.

2. A disc-shaped recording medium according to claim 1, wherein the inner diameter (dI) of the data recording region (RA) of the medium is equal to 32 mm and the outer diameter (dO) of the data recording region (RA) is equal to 61 mm (ordinate/abscissa intersection Q1).

3. A disc-shaped recording medium according to claim 2, wherein the outer diameter (dO) of the medium is equal to 64 mm.

4. A disc-shaped recording medium according to claim 1, wherein the inner diameter (dI) of the data recording region (RA) of the medium is equal to 42 mm and the outer diameter (dO) of the data recording region (RA) is equal to 67 mm (ordinate/abscissa intersection Q2).

5. A disc-shaped medium according to claim 4 wherein the outer diameter (dO) of the medium is equal to 70 mm.

6. A disc-shaped recording medium according to claim 1, wherein the inner diameter (dI) of the data recording region (RA) of the medium is equal to 50 mm and the outer diameter (dO) of the data recording region (RA) is equal to 72 mm (ordinate/abscissa intersection Q3).

7. A disc-shaped recording medium according to claim 6, wherein the outer diameter (dO) of the medium is equal to 76 mm.

8. A disc-shaped recording medium (32, 100) in which:
compressed audio data are recorded at a track pitch of 1.6 micrometres and a linear velocity of 1.2 to 1.4 m/s:
the recorded data are compressed by a ratio at least approximately equal to 1/4;
the data are recorded in sectors each comprising synchronising data, header data and user data; and
the inner diameter (dI) of a data recording region (RA) of the medium is equal to 28 mm and the outer diameter (dO) of the data recording region (RA) is in a range of from 58 to 62 mm.

9. A disc-shaped recording medium (32, 100) in which:
compressed audio data are recorded at a track pitch of 1.6 micrometres and a linear velocity of 1.2 to 1.4 m/s:
the recorded data are compressed by a ratio at least approximately equal to 1/4;
the data are recorded in sectors each comprising synchronising data, header data and user data; and
the inner diameter (dI) of a data recording region (RA) of the medium is equal to 50 mm and the outer diameter (dO) of the data recording region (RA) is in a range of from 71 to 73 mm.

10. A recording medium (100) according to any one of the preceding claims, comprising a disc base plate (101) having a centring hole (102) and having a signal recording layer on a surface (101a) thereof, the disc base plate (101) having a projection (104) around the centring hole (102) on an information readout surface which is a major surface (101b) opposite to the surface (101a) carrying the signal recording layer.

11. A recording medium according to any one of the preceding claims, which has a lead-in region previously provided inwardly of the data recording region (RA).

12. A recording medium according to any one of the preceding claims, wherein the compressed data are recorded in a continuous state.

13. A recording medium according to any one of the preceding claims, in which the audio data are recorded by optical means.

## Patentansprüche

1. Scheibenförmiges Aufzeichnungsmedium (32, 100), wobei:
komprimierte Audiodaten mit einem Spurabstand von 1,6 Mikrometern und einer Lineargeschwindigkeit von 1,2 bis 1,4 m/s aufgezeichnet sind,
die aufgezeichneten Daten mit einem Verhältnis von mindestens näherungsweise 1/4 komprimiert sind,
die Daten in Sektoren aufgezeichnet sind, die jeweils Synchronisierdaten, Kopfdaten und Benutzerdaten umfassen, und
der Innendurchmesser (dI) eines Datenaufzeichnungsbereiches (RA) des Mediums auf einen bestimmten Wert zwischen 28 und 50 mm eingestellt ist, und der Außendurchmesser (dO) des Datenaufzeichnungsbereiches (RA) derart mit dem Innendurchmesser (dI) zusammenhängt, daß der Schnittpunkt zwischen einer dem Innendurchmesser (dI) entsprechenden Ordinate und einer dem Außendurchmesser (dO) entsprechenden Abszisse der in Fig. 1 der anliegenden Zeichnung dargestellten Kurve innerhalb des kreuzweise schraffierten Bereiches, d.h. innerhalb des durch die Kurven L72 und L76 sowie die Grenzordinatenwerte dI = 28 mm und dI = 50 mm begrenzten Bereiches, liegt.

2. Scheibenförmiges Aufzeichnungsmedium nach Anspruch 1, wobei der Innendurchmesser (dI) des Datenaufzeichnungsbereiches (RA) des Mediums 32 mm und der Außendurchmesser (dO) des Datenaufzeichnungsbereiches (RA) 61 mm beträgt (Ordinaten/Abszissen-Schnittpunkt Q1).

3. Scheibenförmiges Aufzeichnungsmedium nach Anspruch 2, wobei der Außendurchmesser (dO) des Mediums 64 mm beträgt.

4. Scheibenförmiges Aufzeichnungsmedium nach Anspruch 1, wobei der Innendurchmesser (dI) des Datenaufzeichnungsbereiches (RA) des Mediums 42 mm und der Außendurchmesser (dO) des Datenaufzeichnungsbereiches (RA) 67 mm beträgt (Ordinaten/Abszissen-Schnittpunkt Q2).

5. Scheibenförmiges Medium nach Anspruch 4, wobei der Außendurchmesser (dO) des Mediums 70 mm beträgt.

6. Scheibenförmiges Aufzeichnungsmedium nach Anspruch 1, wobei der Innendurchmesser (dI) des Datenaufzeichnungsbereiches (RA) des Mediums 50 mm und der Außendurchmesser (dO) des Datenaufzeichnungsbereiches (RA) 72 mm beträgt (Ordinaten/Abszissen-Schnittpunkt Q3).

7. Scheibenförmiges Aufzeichnungsmedium nach Anspruch 6, wobei der Außendurchmesser (dO) des Mediums 76 mm beträgt.

8. Scheibenförmiges Aufzeichnungsmedium (32, 100), wobei:
komprimierte Audiodaten mit einem Spurabstand von 1,6 Mikrometern und einer Lineargeschwindigkeit von 1,2 bis 1,4 m/s aufgezeichnet sind,
die aufgezeichneten Daten mit einem Verhältnis von mindestens näherungsweise 1/4 komprimiert sind,
die Daten in Sektoren aufgezeichnet sind, die jeweils Synchronisierdaten, Kopfdaten und Benutzerdaten umfassen, und
der Innendurchmesser (dI) des Datenaufzeichnungsbereiches (RA) des Mediums 28 mm beträgt und der Außendurchmesser (dO) des Datenaufzeichnungsbereiches (RA) zwischen 58 und 72 mm liegt.

9. Scheibenförmiges Aufzeichnungsmedium (32, 100), wobei:
komprimierte Audiodaten mit einem Spurabstand von 1,6 Mikrometern und einer Lineargeschwindigkeit von 1,2 bis 1,4 m/s aufgezeichnet sind,
die aufgezeichneten Daten mit einem Verhältnis von mindestens näherungsweise 1/4 komprimiert sind,
die Daten in Sektoren aufgezeichnet sind, die jeweils Synchronisierdaten, Kopfdaten und Benutzerdaten umfassen, und
der Innendurchmesser (dI) eines Datenaufzeichnungsbereiches (RA) des Mediums 50 mm beträgt und der Außendurchmesser (dO) des Datenaufzeichnungsbereiches (RA) zwischen 71 und 73 mm liegt.

10. Aufzeichnungsmedium (100) nach einem der vorhergehenden Ansprüche, mit einer scheibenförmigen Basisplatte (101), die ein Zentrierloch (102) sowie auf einer Oberfläche (101a) von ihr eine Signalaufzeichnungsschicht besitzt, wobei die scheibenförmige Basisplatte (101) auf einer Informationsausleseoberfläche um das Zentrierloch (102) herum einen Vorsprung (104) aufweist, wobei die Informationsausleseoberfläche eine gegenüberliegend zu der die Signalaufzeichnungsschicht tragenden Oberfläche (101a) angeordnete Hauptoberfläche (101b) ist.

11. Aufzeichnungsmedium nach einem der vorhergehenden Ansprüche, welches einen Einführungsbereich aufweist, der zuvor innen von dem Datenaufzeichnungsbereich (RA) vorgesehen worden ist.

12. Aufzeichnungsmedium nach einem der vorhergehenden Ansprüche, wobei die komprimierten Daten kontinuierlich aufgezeichnet sind.

13. Aufzeichnungsmedium nach einem der vorhergehenden Ansprüche, wobei die Audiodaten mit optischen Mitteln aufgezeichnet worden sind.

## Revendications

1. Support d'information d'enregistrement sous forme de disque (32, 100) dans lequel :
des données audio comprimées sont enregistrées selon un pas de piste de 1,6 micromètres et une vitesse linéaire de 1,2 à 1,4 mètres par seconde ;
les données enregistrées sont comprimées selon un rapport au moins approximativement égal à 1/4 ;
les données sont enregistrées dans des secteurs dont chacun comprend des données de synchronisation, des données d'en-tête et des données utilisateur ; et
le diamètre interne (dl) d'une région d'enregistrement de données (RA) du support d'information est établi à une valeur prédéterminée dans une plage de 28 à 50 mm et le diamètre externe (dO) de la région d'enregistrement de données (RA) est rapporté au diamètre interne (dl) de telle sorte que l'intersection d'une ordonnée et d'une abscisse représentant respectivement les diamètres interne et externe (dl, dO) sur le graphique représenté sur la figure 1 des dessins annexés tombe dans la zone hachurée en croix, c'est-à-dire la zone délimitée par les courbes L72 et L76 et par les valeurs d'ordonnée limite dl = 28 mm et dl = 50 mm.

2. Support d'information d'enregistrement sous forme de disque selon la revendication 1, dans lequel le diamètre interne (dl) de la région d'enregistrement de données (RA) du support d'information est égal à 32 mm et le diamètre externe (dO) de la région d'enregistrement de données (RA) est égal à 61 mm (intersection ordonnée/abscisse Q1).

3. Support d'information d'enregistrement sous forme de disque selon la revendication 2, dans lequel le diamètre externe (dO) du support d'information est égal à 64 mm.

4. Support d'information d'enregistrement sous forme de disque selon la revendication 1, dans lequel le diamètre interne (dl) de la région d'enregistrement de données (RA) du support d'information est égal à 42 mm et le diamètre externe (dO) de la région d'enregistrement de données (RA) est égal à 67 mm (intersection ordonnée/abscisse Q2).

5. Support d'information d'enregistrement sous forme de disque selon la revendication 4, dans lequel le diamètre externe (dO) du support d'information est égal à 70 mm.

6. Support d'information d'enregistrement sous forme de disque selon la revendication 1, dans lequel le diamètre interne (dl) de la région d'enregistrement de données (RA) du support d'information est égal à 50 mm et le diamètre externe (dO) de la région d'enregistrement de données (RA) est égal à 72 mm (intersection ordonnée/abscisse Q3).

7. Support d'information d'enregistrement sous forme de disque selon la revendication 6, dans lequel le diamètre externe (dO) du support d'information est égal à 76 mm.

8. Support d'information d'enregistrement sous forme de disque (32, 100) dans lequel :
des données audio comprimées sont enregistrées selon un pas de piste de 1,6 micromètres et une vitesse linéaire de 1,2 à 1,4 mètres par seconde ;
les données enregistrées sont comprimées selon un rapport au moins approximativement égal à 1/4 ;
les données sont enregistrées dans des secteurs dont chacun comprend des données de synchronisation, des données d'en-tête et des données utilisateur ; et
le diamètre interne (dl) d'une région d'enregistrement de données (RA) du support d'information est égal à 28 mm et le diamètre externe (dO) de la région d'enregistrement de données (RA) est dans une plage de 58 à 62 mm.

9. Support d'information d'enregistrement sous forme de disque (32, 100) dans lequel :
des données audio comprimées sont enregistrées selon un pas de piste de 1,6 micromètres et une vitesse linéaire de 1,2 à 1,4 mètres par seconde ;
les données enregistrées sont comprimées selon un rapport au moins approximativement égal à 1/4 ;
les données sont enregistrées dans des secteurs dont chacun comprend des données de synchronisation, des données d'en-tête et des données utilisateur ; et
le diamètre interne (dl) d'une région d'enregistrement de données (RA) du support d'information est égal à 50 mm et le diamètre externe (dO) de la région d'enregistrement de données (RA) est dans une plage de 71 à 73 mm.

10. Support d'information d'enregistrement (100) selon l'une quelconque des revendications précédentes, comprenant une plaque de base en forme de disque (101) comportant un trou de centrage (102) et une couche d'enregistrement de signal sur l'une de ses surfaces (101a), la plaque de base en forme de disque (101) comportant une protubérance (104) autour du trou de centrage (102) sur une surface de lecture d'information qui est une surface principale (101b) opposée à la surface (101a) qui supporte la couche d'enregistrement de signal.

11. Support d'information d'enregistrement selon l'une quelconque des revendications précédentes, qui comporte une région d'entrée constituée préalablement au niveau du côté intérieur de la région d'enregistrement de données (RA).

12. Support d'information d'enregistrement selon l'une quelconque des revendications précédentes, dans lequel les données comprimées sont enregistrées dans un état continu.

13. Support d'information d'enregistrement selon l'une quelconque des revendications précédentes, dans lequel les données audio sont enregistrées à l'aide d'un moyen optique.
